Europäisches Patentamt

(19) European Patent Office    (11) Publication number: **0 167 185**
Office européen des brevets    **B1**

(12) EUROPEAN PATENT SPECIFICATION

(45) Date of publication of patent specification: **09.11.88**    (51) Int. Cl.⁴: **C 04 B 18/12,** C 04 B 2/06,
    C 04 B 7/30, C 04 B 7/34,
(21) Application number: **85200681.6**    C 02 F 11/12, B 03 D 1/10

(22) Date of filing: **01.05.85**

(54) Method and apparatus of processing slurries containing rock.

(30) Priority: **01.05.84 NL 8401377**

(43) Date of publication of application:
**08.01.86 Bulletin 86/02**

(45) Publication of the grant of the patent:
**09.11.88 Bulletin 88/45**

(84) Designated Contracting States:
**BE DE FR GB LU NL**

(56) References cited:
**DE-A-2 917 123**
**DE-A-3 046 657**
**DE-A-3 101 395**
**FR-A-2 001 432**

(73) Proprietor: **Strabama Basel AG**
**Lautengartenstrasse 12**
**CH-4052 Basel (CH)**

(72) Inventor: **Boer, Herman**
**Weerdslag 83**
**NL-7206 BV Zutphen (NL)**

(74) Representative: **Schumann, Bernard Herman**
**Johan et al**
**OCTROOIBUREAU ARNOLD & SIEDSMA**
**Sweelinckplein 1**
**NL-2517 GK The Hague (NL)**

Courier Press, Leamington Spa, England.

**0 167 185**

## Description

The present invention relates to a method of processing a slurry containing rock, whereby water is withdrawn from the slurry by adding alkaline earth metal oxide.

Thixotrope slurries containing flotation rock originate from a separating process of coal and fine vein rock. By withdrawal of water from such a slurry flotation rock can be processed to technically and/or economically attractive products.

The slurry containing flotation rock results from a separation process, whereby coal is separated from mine rock and vein rock. The techniques used consist of classifying, screening and a wet separation. In one of the latest phases of said wet separation process of very fine coal and vein rock results after removal of coal dust a slurry of flotation rock with a content of 30—50 kg rock/m³. Next to the slurry containing rock with a particle dimension less than 0.75 mm also result other fractions of mine stone discriminated as coarse and fine so called "Waschberge rock" with a particle dimension of 10—120 mm and 0.75—10 mm, respectively. Table 1 shows a composition of vein rock.

TABLE 1

| Composition of vein rock | | |
|---|---|---|
| Type | Particle size distribution | Quantity |
| Vein rock | 60—120 mm | 10% |
| Coarse "Waschberge rock" | 10—60 mm | 65% |
| Fine "Waschberge rock" | 0.75+10 mm | 20% |
| Flotation rock | 0.75 mm | 5% |

The ratio between the yield of coal and rock is in the order of magnitude equal to 1:1.

At an annual production in 1980 of about 50 million tons of coal there remains about 50 million tons of waste rock, in which the portion of flotation rock is about 5%, equal to about 2.5 million tons.

The storage characteristics of Waschberge rock as waste product are in contrast to flotation rock almost uncomplicated. With respect to slurry containing flotation rock it is for technical reasons for storage necessary to dewater further the slurry with a rock content of 30—50 kg/m³ by a settling- and/or thickening process. The maximum concentration to be obtained with this process is a slurry with a rock content of 500—600 kg/m³. The storage features of this slurry which is almost unmanageable, are as a result of the flow features very bad, and therefore it is stored on storage places which are encountered by dykes. In order to improve the storage features the slurry could be mixed with partly coarse and partly fine Waschberge rock, or is further dehydrated by filtration using filter presses. The water content to be obtained is at maximum 25—30%. This blended and/or pressed rock is disposed of or stored at high costs.

The method according to the invention has for its object on the one hand to provide a process with which thixotrope slurries containing flotation rock are transferred in products which are technically manageable, and which products are optionally processed by a thermal treatment to products with hydraulic binder features. One and the other as such, that not only a waste problem is solved, but also particularly the further thermal treatment is economically accountable and attractive to be performed. Furthermore it is preferred, if the process is performed directly at the site where the thixotrope slurries are formed, that is at the mine, so that transport and optionally intermediate storage problems can be avoided.

According to the proposed method this could be obtained in that the slurry containing rock is a slurry containing flotation rock with a rock concentration of at least 300 kg/m³, and that calcium oxide in such a quantity is added as such, that the product obtained on the one side has a moisture content less than 25%, and on the other hand a CaO-modulus greater than 1.25. Dependent on the stoichiometrical weight quantity of CaO results, in combination with the rock content of the slurry a dry or almost dry reaction product consisting of a mixture of calcium hydroxide and flotation rock.

The moisture content and the CaO modulus are dependent of the way in which calcium oxide is added, because on the one hand the water added is chemically bond and on the other hand is evaporated by the exothermal reaction heat.

As a result of this treatment flotation rock is transformed from a form technically almost unmanageable and therefore not to be handled in the form of a slurry, in one sole treatment in a form which is technically manageable.

Characteristic for the composition and application of the reaction product as raw material for a thermal conversion process into products, such as hydraulic lime and cement is, that the stoichiometrical weight quantity of CaO in combination with the $SiO_2+Al_2O_3+Fe_2O_3$ quantity in the rock is adjusted and thereby

2

tuned on a value of the CaO modulus which is specific for products with hydraulic binder features. These values are larger than 2.5; 2.0 respectively.

Thereby it is accomplished, that the slurry containing flotation rock, originally in the form of a waste product is revaluated to a valuable raw material, using the coal portion present in the flotation rock.

The reaction product is technically important for three reasons, that is:

1) the reaction product can be transported or stored as an agglomerated product;

2) the reaction product can be directly used as a filler for mine corridors out of use;

3) the reaction product can subsequently be converted into products with hydraulic binder features, such as hydraulic lime and cement.

Characteristic for the proposed method is, that it relates to the processing of slurries with a stone content of between 300—600 $kg/m^3$ obtained using any thickening process.

Characteristic to the respective reaction products is, that independent of the rock content of the slurry the specific hydraulic binder features are similar. This is in contrast to the moisture content which is dependent of the rock content of the slurry, and increases as the concentration of the slurry decreases and/or the opposite situation.

As a result of the process technical treatment the reaction products with a critical moisture content of about 15—25% will agglomerate (granulate). Exceeding this critical moisture content leads to "over-granulation". This phenomenon can lead to a serious process obstruction.

The reaction products resulting from slurry concentrations of 30—300 $kg/m^3$ exceed remarkably this critical moisture content and therefore are as such unmanageable.

With respect to the thermal treatment of the reaction products the moisture content should be within 2—15%, dictated by the process conditions.

Characteristic for the application of an agglomerated reaction product as a product to be stored, is that the CaO modulus should be as small as possible, but related to a rock portion which is as large as possible. Table 2 shows a summary of reaction yields/$m^3$ and the respective product composition, starting from a rock content of 300—600 $kg/m^3$, based on a CaO modulus of 1.25.

TABLE 2

| | kg Rock/$m^3$ | | |
| --- | --- | --- | --- |
| | 1<br>400 kg | 2<br>500 kg | 3<br>600 kg |
| CaO Addition/$m^3$ | 298 kg | 372 kg | 446 kg |
| kg Reaction product/$m^3$ | 1364 kg | 1456 kg | 1531 kg |
| % Ca(OH)$_2$ | 28.8% | 33.7% | 38.5% |
| % Rock | 29.3% | 34.4% | 39.1% |
| % H$_2$O | 41.9% | 31.9% | 22.4% |
| CaO: Rock ratio | 0.74:1 | 0.74:1 | 0.74:1 |
| CaO Modulus | 1.25 | 1.25 | 1.25 |
| % Original rock | 50.4% | 50.4% | 50.4% |

These reaction products having a relatively high moisture content, possess in the form of a mortar the features of building mortar. These products exposed to the ambient atmosphere will petrify at their outer surface under uptake of coal dioxide, as a result of an exothermic carbonisation reaction, forming calcium carbonate crystals.

Table 2 shows, that the reaction product from a treatment of a slurry with a rock content of 400—600 $kg/m^3$ is a product, that as result of the process technical handling, in combination with a moisture content of about 25% will agglomerate and, expose to the ambient atmosphere will petrify at its surface. Such a product with a relatively high rock content of about 50%—based on dry material—is attractive with regard to technical storage.

The reaction products from a treatment of slurries with a rock content of between 250—400 $kg/m^3$ are specific for the thermal treatment of hydraulic lime.

Table 3 shows reaction yields/$m^3$ and the corresponding product composition in combination with a CaO modulus of 4.0.

3

**0 167 185**

TABLE 3

|  | kg Rock/m³ | | |
|---|---|---|---|
|  | 1<br>250 kg | 2<br>300 kg | 3<br>400 kg |
| CaO Addition/m³ | 595 kg | 714 kg | 952 kg |
| kg Reaction product/m³ | 1453 kg | 1544 kg | 1726 kg |
| % Ca(OH)₂ | 54.0% | 61.0% | 72.8% |
| % Rock | 17.2% | 19.4% | 23.2% |
| % H₂O | 28.7% | 19.6% | 4.0% |
| CaO: Rock ratio | 2.38:1 | 2.38:1 | 2.38:1 |
| CaO Modulus | 4.0 | 4.0 | 4.0 |
| % Original rock | 24.1% | 24.1% | 24.1% |

Characteristic is, that for a CaO modulus of 4.0 the reaction product from a treatment of slurries with a rock content of 300—400 kg/m³ match to the limits of the moisture content for a thermal application, that is about 2—15% (Table 3, column 2 and 3).

The reaction products from a treatment of slurries with a rock content of 400—600 kg/m³ are specific for a thermal treatment of cement.

Table 4 shows reaction yields/m³ and the respective product composition in combination with a CaO modulus of 2.0.

TABLE 4

|  | kg Rock/m³ | | |
|---|---|---|---|
|  | 1<br>400 kg | 2<br>500 kg | 3<br>600 kg |
| CaO Addition/m³ | 476 kg | 595 kg | 714 kg |
| kg Reaction product/m³ | 1462 kg | 1576 kg | 1694 kg |
| % Ca(OH)₂ | 43.0% | 49.7% | 55.6% |
| % Rock | 27.4% | 31.7% | 35.4% |
| % H₂O | 29.7% | 18.6% | 9.0% |
| CaO: Rock ratio | 1.19:1 | 1.19:1 | 1.19:1 |
| CaO Modulus | 2.0 | 2.0 | 2.0 |
| % Original rock on dry material basis | 39.0% | 39.0% | 39.0% |

Characteristic is, that at a CaO modulus of 2.0 the reaction product of a treatment of slurries with a rock content of 500—600 kg/m³ match to the limited moisture content for the thermal application, that is about 2—15% (Table 4, column 2 and 3).

Characteristic to products, such a cement, is that the binder features are optimal and a CaO modulus of 1.8—2.2, a $SiO_2$ modulus of 1.5—4.0 and a $Al_2O_3$ modulus of about 2.0. As the $SiO_2$ modulus and the $Al_2O_3$ modulus of the $SiO_2+Al_2O_3+Fe_2O_3$ part in the rock is not within the aforementioned, optimal range, the thermal product obtained is classified as a second grade cement.

Using an upgrading addition in the form of $SiO_2$ and $Fe_2O_3$ rich products this ratio of the $SiO_2$; $Al_2O_3$

4

and $Fe_2O_3$ part in the rock is changed as such, that the $SiO_2$ modulus and $Al_2O_3$ modulus pass over into the optimal range. The thermal product obtained is classified as a first grade cement.

Table 5 shows the yield/m³ and the composition of the thermal products obtained with a CaO modulus 4.0, and with a CaO modulus 2.0, respectively, in combination with or without a grading addition.

TABLE 5

| | kg Rock/m³ | | |
| --- | --- | --- | --- |
| | 1<br>400 kg | 2<br>500 kg | 3<br>600 kg |
| CaO Addition/m³ | 952 kg | 808 kg | 714 kg |
| Upgrading addition/m³ | — | 117 kg | — |
| kg Reaction product/m³ | 1726 kg | 1814 kg | 1694 kg |
| kg Thermical product/m³ | 1232 kg | 1275 kg | 1134 kg |
| Type of product | hydr. lime | 1st grade cement | 2nd grade cement |
| % CaO | 77.3% | 63.4% | 63.0% |
| % Thermical rock | 22.7% | 27.5% | 37.0% |
| % Upgrading addition | — | 9.1% | — |
| CaO Modulus | 4.0 | 2.0 | 2.0 |
| $SiO_2$ Modulus | — | 1.7 | 1.5 |
| $Al_2O_3$ Modulus | — | 2.0 | 5.6 |
| % Original rock | 32.4% | 39.3% | 52.9% |

Column 1) the thermal product obtained out of the reaction product out of the processing of a slurry with a rock content of 400 kg/m³ (Table 3, column 3) is qualified as hydraulic lime.

Column 2) the thermal product obtained out of the reaction product out of the processing of a slurry with a rock content of 500 kg/m³ in combination with an upgrading addition containing 63% $SiO_2$ and 29% $Fe_2O_3$ is qualified as a first grade cement.

Column 3) the thermal product obtained out of the reaction product out of the processing of a slurry with a rock content of 600 kg/m³ (Table 4, column 3) classified as a second grade cement.

Characteristic to the formation of thermal products is, that the process temperature for the production of hydraulic lime is 1050°C, and to the production of cement is 1400°C. An advantageous environmental fact is, that lue gases resulting from this thermal process are poor in sulphur.

The sulphur portion in lime rock is converted by oxidation into $SO_2$ and $SO_3$ respectively, and these react with CaO to gypsum which is resistant to the thermal treatment.

The method proposed provides the development of a treatment for the conversion of slurries which are almost unmanageable, into reaction products which are dry or almost dry and are technologically manageable. These reaction products consist of mixtures of calcium hydroxide and flotation rock. These reaction products have the features of building mortar and after the thermal treatment of hydraulic lime or cement.

An installation of winning minerals, particularly coal, having means for separating the minerals from a slurry containing rock, particularly flotation rock, is characterized by a unit for adding quick lime to the slurry.

The reaction products and/or agglomerated reaction products are in principle useful as fillers for mine corridors out of use. Accordingly slurry processing costs, transport costs and storage costs are avoided, whereas according to the proposed method the product can be used at site subsoil.

If an installation is further characterized in that a subsequent unit for subjecting the dehydrated product to a thermal treatment these products can be converted into hydraulic lime and cement following the thermal road, using the relatively high coal portion present in the products to be converted.

Accordingly saving the aforementioned costs, in combination with the advantageous process heat

5

economy consisting of energy saving in the form of combustion heat from the coal portion, the heat released in the reaction using quick lime, and saving milling costs (fine flotation rock) the costs for lime raw material are neutralized.

Characteristic for the reaction products resulting from the processing of slurries with a rock content of 300—600 kg/m$^3$ is a relatively high calcium hydroxide portion. As a result the thermal products obtained have the characteristics of hydraulic lime with a CaO modulus which is considerably larger than 2.5.

This aspect could be mitigated by dehydrating reaction products resulting from the processing of slurries with a rock content of more than 300 kg/m$^3$ thermally at a temperature of 350—450°C. It is to be expected, that the calcium hydroxide portion is completely or almost completely decomposed into calcium oxide and water vapour, whereas rock present does not participate in this reaction. At a single recirculation of a hydrated reaction product in order to replace the stoichiometrical weight quantity of quick lime the rock portion will double with respect to the calcium hydroxide portion which will remain unchanged.

The number of recycling steps is dependent on the starting concentration of the rock slurry. At a slurry concentration of 250 kg rock/m$^3$ the number of recycling steps is two, at a slurry concentration of 350 kg rock/m$^3$ just one.

Characteristic to the application of the method is, that the concentration of a slurry with a rock content of 30—50 kg/m$^3$ to 300—350 kg/m$^3$ is performed using available thickening processes, and a subsequent treatment using a quick lime addition in the form of a hydrated reaction product.

The composition of a reaction product obtained with this treatment, is 55.4% Ca(OH)$_2$, 35.3% rock and 9.3% moisture, versus the composition of the reaction product mentioned in Table 4, column 4, that is: 55.6% Ca(OH)$_2$; 35.4% rock and 9.0% moisture.

The method proposed will be illustrated in several examples.

Example 1 (Table 5, column 1)

For the production of hydraulic lime 1 m$^3$ slurry with a rock content of 400 kg/m$^3$ is used. Based on dry material flotation rock, with the following composition is used:

|  |  |
|---|---|
| SiO$_2$ | : 35.7% |
| Al$_2$O$_3$ | : 20.3% |
| CaO | : 2.1% |
| Fe$_2$O$_3$+FeO | : 3.5% |
| MgO | : 1.4% |
| Na$_2$O+K$_2$O | : 3.9% |
| and residue | : 3.1% |
| Loss due to burning | : 30.0% |

|  |  |
|---|---|
| Specific weight of rock | : 2.0 |
| Coal content based on dry material | : 25.0% |

Loss due to burning free:

|  |  |
|---|---|
| SiO$_2$ | : 51.0% |
| Al$_2$O$_3$ | : 29.0% |
| CaO | : 3.0% |
| Fe$_2$O$_3$+FeO | : 5.0% |
| Residue | : 12.0% |

|  |  |
|---|---|
| CaO Addition/m$^3$ | : 952 kg |
| kg Moisture in the reaction product/m$^3$ | : 69 kg |
| kg Reaction product/m$^3$ | : 1726 kg |
| kg Thermical product/m$^3$ | : 1232 kg |

Theoretical composition of the thermal product:

|  |  |
|---|---|
| CaO | : 77.3% |
| SiO$_2$ | : 11.6% |
| Al$_2$O$_3$ | : 6.6% |
| Fe$_2$O$_3$ | : 1.1% |
| Residue | : 3.4% |
| CaO Modulus | : 4.0. |

This product is classified as hydraulic lime with moderate binding features. The CaO portion is dominantly present as free CaO.

6

Example 2 (Table 5, column 3)
For the production of a second grade cement 1 m³ slurry with a rock content of 600 kg/m³ is used.

| CaO Addition/m³ | : | 714 kg |
|---|---|---|
| kg Moisture in the reaction product/m³ | : | 152 kg |
| kg Reaction product/m³ | : | 1694 kg |
| kg Thermical product/m³ | : | 1134 kg |

Theoretical composition of the thermical product:

| CaO | : | 63.0% |
|---|---|---|
| SiO₂ | : | 18.9% |
| Al₂O₃ | : | 10.7% |
| Fe₂O₃ | : | 1.9% |
| Residue | : | 5.5% |

| CaO Modulus | : 2.0 | Versus cement | : 2.0 |
|---|---|---|---|
| SiO₂ Modulus | : 1.5 | Versus cement | : 1.5—4.0 |
| Al₂O₃ Modulus | : 5.6 | Versus cement | : 2.0 |

This product is classified as cement, with excellent binding features. The lower limit for the $SiO_2$ modulus with respect to a very high upper limit of the $Al_2O_3$ modulus is characteristic to cement products with relatively fast curing property in combination with a low pressure resistance (a brittle product). A remedy thereto is an upgrading addition consisting of $SiO_2+Fe_2O_3$.

Example 3 (Table 5, column 2)
For the production of a first grade cement 1 m³ slurry with a rock content of 500 kg/m³ is used. An upgrading addition 117 kg is added in the form of a product consisting of 63% $SiO_2$ and 29% $Fe_2O_3$.
The CaO addition is 808 kg. Yield 1814 kg reaction product. After thermal treatment the yield is 1275 kg.
Theoretical composition of the thermal product:

| CaO | : | 63.4% |
|---|---|---|
| SiO₂ | : | 19.8% |
| Al₂O₃ | : | 7.9% |
| Fe₂O₃ | : | 4.0% |
| Residue | : | 4.9% |

| CaO Modulus | : 2.0 | Versus cement | : 2.0 |
|---|---|---|---|
| SiO₂ Modulus | : 1.7 | Versus cement | : 1.5—4.0 |
| Al₂O₃ Modulus | : 2.0 | Versus cement | : 2.0 |

Example 4 (recycling of a reaction product which is thermically dehydrated)
Use is made of 1 m³ with a rock content of 350 kg/m³.

| CaO Addition/m³ | : | 833 kg |
|---|---|---|
| kg Moisture in the reaction product/m³ | : | 185 kg |
| kg Reaction product/m³ | : | 1635 kg |
| kg Dehydrated reaction product/m³ | : | 1183 kg |
| kg Reaction product after a single recycling | : | 1985 kg |

Composition of the reaction product after a single recycling:
Ca(OH)₂: 55.4%; rock: 35.3%.
Moisture: 9.3% versus a normal reaction product:
Ca(OH)₂: 55.6%; rock: 35.4%.
Moisture: 9.0% (Table 4, column 3).

The thermal treatment of the product obtained after the addition of calcium oxide, for the production of hydraulic binding products, cement and lime, results in fact solely in an economical valuable product, because the flotation rock which originally originates from the slurry, has a coal portion of about 25—30% based on dry weight. It is this coal that at least for an important part provides the energy for the thermal treatment.

**Claims**

1. Method of processing a slurry containing rock, whereby water is withdrawn from the slurry by

7

adding calcium oxide characterized in that the slurry containing rock is a thixotrope slurry containing flotation rock with a rock concentration of at least 300 kg/m³, and that calcium oxide is added in such a quantity, that the product obtained on the one side has a moisture content less than 25%, and on the other hand a CaO-modulus greater than 1.25.

2. Method as claimed in claim 1, characterized in that the product obtained possesses binder features and having a CaO modulus of 1.8—2.2.

3. Method as claimed in claim 1, characterized in that the product obtained is a hydraulic lime and having a CaO modulus of about 4.

4. Method as claimed in claim 1—3, characterized in that said product has a moisture content of 15—25%.

5. Method as claimed in claim 1—4, characterized in that the product is caused to be petrified.

6. Method as claimed in claim 1—5, characterized in that said product has a moisture content of 2—15% and is treated thermally.

7. Method as claimed in claim 6, characterized in that the slurry containing flotation rock has a rock concentration of 300—400 kg/m³, and the thermal treatment is performed at about 1050°C.

8. Method as claimed in claim 6, characterized in that the slurry containing flotation rock has a rock concentration of 400—600 kg/m³ and the thermal treatment is performed at about 1400°C.

9. Method as claimed in claim 6—8, characterized in that prior to the thermal treatment an upgrading addition is added.

10. Method as claimed in claim 6—9, characterized in that at least part of the product is subjected to such a thermal treatment, that a mixture of rock and quick lime is formed, and that this mixture is added to a slurry containing rock, and which is to be dehydrated.

11. Use of the method as claimed in claims 1—10 for putting into operation an installation of winning minerals, particularly coal, having means for separating the minerals from a slurry containing rock.

**Patentansprüche**

1. Verfahren zur Verarbeitung von gesteinshaltigen Schlämmen, wobei durch die Zugabe von Kalziumoxid dem Schlamm Wasser entzogen wird, dadurch gekennzeichnet, daß der gesteinshaltige Schlamm ein thixotroper Schlamm ist, der Flotationsgestein enthält mit einer Gesteinskonzentration von mindestens 300 kg/m³, und daß Kalziumoxid in der Menge zugefügt wird, daß das erhaltene Produkt einerseits einen Feuchtigkeitsgehalt von weniger als 25% und andererseits einen CaO-Faktor größer als 1,25 hat.

2. Verfahren nach Anspruch 1, dadurch gekennzeichnet, daß das erhaltene Produkt Bindereigenschaften besitzt und einen CaO-Faktor von 1,8 bis 2,2 hat.

3. Verfahren nach Anspruch 1, dadurch gekennzeichnet, daß das erhaltene Produkt ein hydraulischer Kalk ist und einen CaO-Faktor von etwa 4 hat.

4. Verfahren nach Anspruch 1 bis 3, dadurch gekennzeichnet, daß das Produkt einen Feuchtigkeitsgehalt von 15—25% hat.

5. Verfahren nach Anspruch 1 bis 4, dadurch gekennzeichnet, daß man das Produkt abhärten läßt.

6. Verfahren nach Anspruch 1 bis 5, dadurch gekennzeichnet, daß das Produkt einen Feuchtigkeitsgehalt von 2—15% hat und thermisch behandelt wird.

7. Verfahren nach Anspruch 6, dadurch gekennzeichnet, daß der Schlamm, der Flotationsgestein enthält, eine Gesteinskonzentration von 300—400 kg/m³ hat, und die thermische Behandlung bei etwa 1050°C durchgeführt wird.

8. Verfahren nach Anspruch 6, dadurch gekennzeichnet, daß der Schlamm, der Flotationsgestein enthält, eine Gesteinskonzentration von 400—600 kg/m³ hat, und die thermische Behandlung bei etwa 1400°C durchgeführt wird.

9. Verfahren nach Anspruch 6 bis 8, dadurch gekennzeichnet, daß vor der thermischen Behandlung ein Veredelungszusatz zugegeben wird.

10. Verfahren nach Anspruch 6 bis 9, dadurch gekennzeichnet, daß zumindest ein Teil des Produktes einer solchen thermischen Behandlung unterzogen wird, daß ein Gemisch aus Gestein und ungelöschtem Kalk entsteht, und daß dieses Gemisch einem gesteinshaltigen Schlamm, der zu entwässern ist, zugefügt wird.

11. Anwendung eines Verfahrens nach Anspruch 1 bis 10 zum Betrieb einer Anlage für Mineralgewinnung, insbesondere Kohlegewinnung, die Mittel zur Trennung der Minerale von einem gesteinshaltigen Schlamm aufweist.

**Revendications**

1. Procédé de traitement d'une boue contenant une roche, par lequel l'eau est éliminée de la boue en ajoutant de l'oxyde de calcium, caractérisé en ce que la boue contenant la roche est une boue thixotrope contenant une roche de flotation ayant une concentration en roche d'au moins 300 kg/m³, et en ce que l'oxyde de calcium est ajouté en une quantité telle que le produit a, d'une part, une teneur en humidité inférieure à 25%, et a, d'autre part, un module de CaO supérieur à 1,25.

2. Procédé suivant la revendication 1, caractérisé en ce que le produit obtenu possède des caractéristiques de liant et a un module de CaO de 1,8—2,2.

3. Procédé suivant la revendication 1, caractérisé en ce que le produit obtenu est une chaux hydraulique et a un module de CaO d'environ 4.

4. Procédé suivant les revendications 1 à 3, caractérisé en ce que ledit produit a une teneur en humidité de 15 à 25%.

5. Procédé suivant les revendications 1 à 4, caractérisé en ce qu'on provoque la pétrification du produit.

6. Procédé suivant les revendications 1 à 5, caractérisé en ce que ledit produit a une teneur en humidité de 2 à 15% et est traité thermiquement.

7. Procédé suivant la revendication 6, caractérisé en ce que la boue contenant la roche de flottation a une concentration en roche de 300 à 400 kg/m$^3$ et en ce que le traitement thermique est effectué à environ 1050°C.

8. Procédé suivant la revendication 6, caractérisé en ce que la boue contenant la roche de flottation a une concentration en roche de 400 à 600 kg/m$^3$ et en ce que le traitement thermique est effectué à environ 1400°C.

9. Procédé suivant les revendications 6 à 8, caractérisé en ce qu'avant le traitement thermique, on ajoute un additif valorisant.

10. Procédé suivant les revendications 6 à 9, caractérisé en ce qu'au moins une partie du produit est soumise à un traitement thermique tel qu'il se forme un mélange de roche et de chaux vive, et en ce que ce mélange est ajouté à une boue contenant une roche, qui doit être déshydratée.

11. Utilisation du procédé suivant les revendications 1 à 10 pour la mise en fonctionnement d'une installation d'obtention de minéraux, en particulier de charbon, comportant des moyens pour séparer les minéraux d'une boue contenant une roche.